# EUROPEAN PATENT SPECIFICATION

(11) **EP 3 483 206 B1**
(45) Date of publication and mention of the grant of the patent: **26.08.2020**
(21) Application number: 17201169.4
(22) Date of filing: 10.11.2017
(51) Int. Cl.: C08J 5/18, A01F 25/13, B32B 27/32

(54) **POLYETHYLENE-BASED BARRIER FILM USEFUL IN THE PRODUCTION OF SILAGE**
POLYETHYLEN-BASIERTE BARRIEREFOLIE NÜTZLICH FÜR DIE SILAGEPRODUKTION
FILM BARRIÈRE À BASE DE POLYÉTHYLÈNE UTILE POUR LA PRODUCTION D'ENSILAGE

(43) Date of publication of application: 15.05.2019
(73) Proprietor: Trioplast France SAS, 49420 Pouancé (FR)
(72) Inventor: DERVYN, Marc, 44522 Mésanger (FR)
(74) Representative: AWA Sweden AB

(56) References cited:
- EP-A1- 3 009 263
- US-A- 4 668 575
- US-A- 5 075 156
- US-A- 5 145 728
- US-A1- 2003 055 175
- US-A1- 2003 125 469
- US-A1- 2010 205 910
- US-B2- 6 824 864
- DATABASE WPI Week 201434 3 April 2014 (2014-04-03) Thomson Scientific, London, GB; AN 2014-G08926 XP002779771, -& KR 2014 0040520 A (LOTTE CHEM CORP) 3 April 2014 (2014-04-03)

## Description

### Field of the invention

The present invention relates to protective films for use in agriculture, in particular silage production.

### Background

Plastic film is used for many different purposes. For example, plastic stretch film is frequently used in different fields of application, in particular for wrapping various products, for example wrapping goods for shipping or storing, or for wrapping agricultural bulk products, such as grass, straw, various crops, etc. In agricultural applications, stretch film may for instance be used as fodder protection and silage film. For the production of silage, anaerobic conditions are desirable, and so the film should provide a barrier against moisture and oxygen.

Silage can be produced and stored in the form of bales or in a bunker silo or a pit silo. In the production of baled silage, a baler is first used to form a compact bale of the crop/vegetable product intended to be ensiled, and the bale is subsequently wrapped tightly with net, twine or film to retain the shape of the bale. Once the net, twine or film is lying around the bale, the formed bale is ejected from the baling chamber. The bale is then wrapped with an agricultural stretch wrap film using a bale wrapper. In the bale wrapper the agricultural stretch wrap film is stretched, typically in the range of 50-75% and the stretched agricultural stretch wrap film is wrapped multiple turns around the bale to form an airtight and waterproof bale suitable for silage production. For production of silage in silos, a large volume of crop (e.g. grass) is deposited in an open bunker, or formed into a heap on the ground, and subsequently covered with a protective silage film to provide an airtight cover. The crop may be compacted prior to covering with the protective film. The film is often secured by placing heavy objects, such as tyres, on top of the film.

Conventionally, agricultural silage films are made primarily of one or more polymers, in particular polyolefins (e.g. polyethylene). The polyolefin is extruded and blown to form a tubular film. Usually various additives such as pigments, tackifiers, UV stabilizers, etc, are added to the film composition in order to meet the requirements of the intended use. Silage films typically contain UV stabilizers, and often pigments to reflect sunlight and/or to reduce transmission of sunlight into the bale or silo. Stretch film for baled silage also requires high cling, and high mechanical performance in terms of good resistance to puncturing and tearing. Also for use in bunker or pit silos the mechanical properties of the film are of importance.

Conventionally, silage films have consisted of a single layer, although in recent years multilayer films for silage applications have emerged. For example, US2010205910 and EP3009263 disclose films for use in the production of silage. Nevertheless, current silage films allow leakage of oxygen into the bale which results in undesirable aerobic decomposition of the crop. Even under good conditions, up to 5 % of the nutritional value of the silage may be lost due to such oxygen leakage. This also means a considerable economic loss for the farmer. For baled silage, one or more extra turns of wrapping film can be applied around the bale to increase protection and reduce oxygen leakage into the bale. However, using more film increases the materials cost, and a more time-consuming wrapping procedure also means an economic loss.

As an alternative, special oxygen barrier films are available, containing a core layer of an oxygen barrier material such as ethylene-vinyl alcohol or polyamide. However, such films are relatively expensive and may be difficult to produce, process and/or recycle due to the content of ethylene-vinyl alcohol or polyamide.

Hence, there is a demand for silage films with improved barrier properties.

### Summary of the invention

It is an object of the present invention to at least partly overcome the problems in the prior art, and to provide a film with mechanical properties suitable for use as a silage film and which offers desirable barrier properties.

According to a first aspect of the invention, this and other objects are achieved by the use of a polyethylene-based film as a protective film for the production of silage, said film comprising polyethylene at a content of 60-90 % by weight of the film, wherein the polyethylene is selected from linear low density polyethylene (LLDPE) and low density polyethylene (LDPE) and combinations thereof, wherein the LLDPE and LDPE have a density of 0.930 g/cm³ or less, and a dicyclopentadiene hydrocarbon resin at a content of 3-20 % by weight of the film.

The present inventors surprisingly found that by including dicyclopentadiene hydrocarbon resin in a film based on linear low density polyethylene (LLDPE) and/or low density polyethylene (LDPE), considerably improved oxygen barrier property was obtained, while preserving the excellent mechanical properties of polyethylene of low density making the film useful as a silage film. It was found that the oxygen transmission rate was reduced by up to 35-40 % compared to films that did not contain the dicyclopentadiene hydrocarbon resin. Meanwhile, the strength at break (MD and TD, respectively) was largely unaffected or only slightly decreased, elongation at break was largely unaffected or slightly increased, and Elmendorf tear strength was largely unaffected.

As used herein, "low density" when referring to polyethylene refers to a density of 0.930 g/cm³ or less, such as 0.925 g/cm³ or less.

In addition, it was found that during production of the film using a blown film co-extrusion process that the extruder engine intensity decreased by 15 % in the three screws used, and the pressure before the filter also decreased in all three screws used. This may allow a further increase of the output of one or more of the screws, so as to produce layer(s) of higher thickness. Increasing the relative thickness of a layer comprising mainly mLLDPE may improve the mechanical properties of the film. Alternatively, a reduced engine intensity means energy savings.

Advantageously, a film according to the present invention is readily recyclable, and the polyethylene content can be recycled in its entirety. The films according to the invention may further be free of conventional barrier materials such as, for instance, ethylene vinyl alcohol (EVOH) or polyamide, which are not easily recyclable and/or obstructs recycling of the polyethylene content of such conventional barrier films.

At least part of the polyethylene content of the film may originate from regranulated polyethylene, that is, recycled polyethylene. The regranulated polyethylene may contain a combination of linear low density polyethylene (LLDPE) and low density polyethylene (LDPE), and may have a density of up to 930 g/cm³ s, such as in the range of from 0.860 to 0.930 g/cm³.

According to preferred embodiments, the dicyclopentadiene hydrocarbon resin has a softening point in the range of 100-145 °C, preferably 130-145 °C. A dicyclopentadiene hydrocarbon resin having a softening point above 130 °C, such as between 130-145 °C, may have increased barrier properties.

In embodiments, the film comprises a dicyclopentadiene hydrocarbon resin at a content of 4.5-15 % by weight of the film, such as 5-15 % by weight of the film, such as 6-13 % by weight of the film

In embodiments, the dicyclopentadiene hydrocarbon resin is at least 90 % hydrogenated.

In embodiments, the film comprises at least one layer containing a mixture of linear low density polyethylene and dicyclopentadiene.

In embodiments, the dicyclopentadiene hydrocarbon resin is present at a content of 5-13 % by weight of the film.

In embodiments, the film has an oxygen gas transmission rate (OTR) of 250 cm³/m²/24h or less, as measured according DIN 53380-3 using air instead of oxygen gas.

In embodiments, the film is a multilayer film, preferably comprising at least a first outer layer, a second outer layer, and a core layer arranged between said first outer layer and said second outer layer.

In embodiments, the film has a thickness in the range of from 15 to 180 µm. As an example, the fim may have athickness that is more than 70 µm, such as more than 80 µm.

The film may further comprise pigments. The film may furhter comprise dyes. The film may further comprise fillers. The film may further comprise UV stabilizers. The film may further comprise tackifiers. The film may further comprise slip agents. The film may further comprise nucleating agents. The film may further comprise processing aids. Thus, in embodiments, the film further comprises one or more additives selected from pigments, dyes, fillers, UV stabilizers, tackifiers, slip agents, nucleating agents, and processing aids.

In embodiments, the film comprises one or more pigments at a content of from 3 to 10 % by weight of the film, such as from 5 to 7 % by weight of the film.

In embodiments, the film has a density in the range of from 0.920 to 1.00 kg/m³.

In embodiments, the film has a thickness in the range of from 80 to 180 µm, preferably from 90 to 125 µm and optionally a width in the range of 5-20 m, preferably 6-18 m.

In embodiments, the film is cut to a length of 400 m or less, preferably 100 m or less.

In embodiments, the film has a thickness in the range of from 15 to 30 µm and optionally a width in the range of from 500 to 1500 mm, preferably 500-750 mm or 1100 to 1500 mm.

As an example, the film may be cut to a length of 1500-2500 m, preferably 1800-2200 m.

In embodiments, the film is prestretched.

Typically, the film according to embodiments of the present invention allows an anaerobic environment to be formed and thereby nutrients and energy content of the silage to be preserved during storage. A silage film should form a gas barrier, in particular an oxygen barrier. The oxygen barrier properties can be measured according to known standards, such as ASTM D3985 or DIN 53380-3. A silage film as disclosed herein may have an oxygen transmission rate (OTR) of 10 000 cm³/m²/24h or less as determined according to DIN 53380-3.

A silage film according to embodiments of the present invention suitable for use as a stretch wrap silage film for baling may have an oxygen permeability of less than 10 000 cm³/m²/day, such as within the range of from 1 000 to 10 000 cm³/m²/24 h measured according to DIN 53380-3 Stretch wrap films are thin, but are wrapped multiple turns around a bale.

Silage films for bunker or pit silos, on the other hand, are typically thicker than stretch wrap silage films, and as such may have an OTR which is considerably lower than a thin stretch wrap film. Silage films according to the invention suitable for use in such applications may have an OTR of 250 cm³/m²/day or less as determined according to DIN 53380-3.

The film may be a monolayer film or a multilayer film, and may be produced by conventional means, such as cast extrusion or blow extrusion. According to an embodiment, the polyethylene film is a coextruded multi-layer blown film comprising at least two layers. Preferably, the polyethylene film is a multi-layer film comprising at least three layers: at least one core layer arranged between two exterior layers.

By the term "mechanical properties" or "mechanical performance" is herein mainly meant the mechanical strength of the material, measured in terms of at least one of tensile strength, tear strength and puncture resistance. Tensile strength, measured as force per unit area, is defined as the maximum stress that a material can withstand while being stretched or pulled before failing or breaking. Tear strength, typically measured as force per unit length, is defined as the resistance of a material to the growth of e.g. a cut when under tension. Elongation at break is defined as the ultimate elongation (given as percentage of the initial length) of a material before it breaks under tension. Puncture resistance, typically measured as mass per unit length, is defined as the relative ability of a material to withstand a falling dart without breaking.

According to an embodiment, the prestretched polyethylene film is a silage film, such as an agricultural bale wrap film or a silage cover film for use in a bunker silo or a pit silo.

In embodiments, the use of the film is for covering a pit silo or a bunker silo. In embodiments, the use of the film is for wrapping of silage bales.

### Brief description of the drawings

The invention will hereinafter be described in detail by reference to exemplary embodiments as illustrated in the following drawings, in which:
Fig. 1 is a schematically illustrates, in cross-section, a multilayer film according to embodiments of the present invention.
Fig. 2 is a schematic illustration of a production line for producing a film according to embodiments of the invention.

### Detailed description

Preferred embodiments of the invention will now be described in more detail.

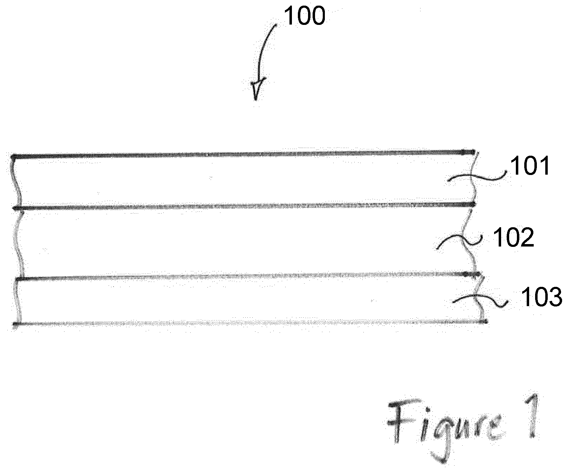

Fig. 1 schematically illustrates, in cross-section, a protective film for the production of silage according to embodiments of the present invention. The film 100 is a multilayer film comprising three layers: a first outer layer 101, a middle layer or core layer 102, and a second outer layer 103. The first and second outer layers are arranged on opposing sides of the core layer, and in this embodiment having only three layers, are in contact with the core layer while each outer layers forms an exterior surface of the film. The outer layers 101, 102 may be referred to as outermost layers or skin layers. However, in embodiments having more than three layers, e.g. five or seven layers, additional skin layers may be provided outwardly of the outer layers 101, 103 in relation to the core layer. Alternatively or additionally, additional layers may be provided in the form of additional core layers, e.g. on opposing sides of the core layer 102 but in between the outer layers 101, 103.

The layers 101, 102, 103 may have the same or different composition. Each of the layers 101, 102, 103 may comprise, as a base material, a polyethylene or a blend of polyethylenes, having a density of up to 0.930 g/cm³, such as from 0.860 to 0.930 g/cm³ or to 0.925 g/cm³. The polyethylene or blend of polyethylenes may include virgin polyethylene material such as metallocene catalyzed LLDPE (mLLDPE) or Ziegler-Natta catalyzed LLDPE (znLLDPE), or recycled polyethylene material, which may comprise a blend of LLDPE and LDPE. The outer layers 101, 103 may contain mLLDPE as base material. The core layer(s) may contain as base material a blend of LLDPE and LDPE obtained from recycled polyethylene.

Linear low density polyethylene ("LLDPE") comprises, in polymerized form, a majority weight percent of ethylene based on the total weight of the LLDPE. LLDPE can be an interpolymer of ethylene and at least one ethylenically unsaturated comonomer. The comonomer can be a C3-C20 α-olefin. Alternatively, the comonomer can be a C3-C8 α-olefin. The C3-C8 a-olefin can be selected from propylene, 1- butene, 1-hexene, or 1-octene. The LLDPE used in the present invention may be selected from the following copolymers: ethylene/propylene copolymer, ethylene/butene copolymer, ethylene/hexene copolymer, and ethylene/octene copolymer. In a further embodiment, the LLDPE is an ethylene/octene copolymer.

LLDPE typically has a density in the range from about 0.890 g/cm³ to about 0.940 g/cm³, or from about 0.91 g/cm³ to about 0.94 g/cm³. LLDPE may have a melt index (MI) from about 0.1 g/10 min to about 10 g/10 min, or about 0.5g/10 min to about 5g/10 min.

LLDPE can be produced with Ziegler-Natta catalysts, or single-site catalysts, such as vanadium catalysts and metallocene catalysts (mLLDPE). In an embodiment, the LLDPE is produced with a Ziegler-Natta type catalyst. LLDPE is linear and is different than low density polyethylene ("LDPE") which is branched or heterogeneously branched polyethylene. LDPE has a relatively large number of long chain branches extending from the main polymer backbone. LDPE can be prepared at high pressure using free radical initiators, and typically has a density from 0.915 g/cc to 0.940 g/cc.

The film contains polyethylene at a content of 60-90 % by weight of the film, for instance from 70 to 90 %, or from 75 to 88 %. In embodiments, any one layer 101, 102 or 103 may contain from 40 to 99 % of polyethylene base material having a density of 0.930 g/cm³ or less, such as 0.860-0.930 g/cm³. The film may contain mLLDPE at a content of from 20 to 90 % by weight of the film. In addition to a polyethylene base material, at least one layer of the film 100 contains a dicyclopentadiene hydrocarbon resin. In an embodiment, the core layer 102 contains a dicyclopentadiene hydrocarbon resin. In another embodiment, each of the layers 101, 102, 103 contains a dicyclopentadiene hydrocarbon resin. The total content of the dicyclopentadiene hydrocarbon resin is from 3 to 20 % by weight of the film, typically from 3 to 15 % by weight of the film. Where the dicyclopentadiene hydrocarbon resin is present in more than one layer, the content of the dicyclopentadiene hydrocarbon resin may be the same in each layer, or the content may be different in the different layers. In an embodiment, the outer layers 101, 103 may be free of dicyclopentadiene hydrocarbon resin. In embodiments of the film having more than three layers, any skin layer may be free of dicyclopentadiene hydrocarbon resin.

Dicyclopentadiene hydrocarbon resins are known and may be obtained e.g. by from thermal polymerization of olefin feeds rich in dicyclopentadiene (DCPD), or by other means e.g. as described in WO 98/55537 A1. The dicyclopentadiene hydrocarbon resin may be provided in the form of a masterbatch mixed with polyethylene, such as LLDPE. Preparation of a masterbatch is known and is described e.g. in WO 98/55537 A1. Masterbatches containing dicyclopentadiene hydrocarbon resin are commercially available.

The dicyclopentadiene hydrocarbon resin for use in the present invention may have a softening point in the range of from 100 to 140 °C, or about 140 °C. The dicyclopentadiene hydrocarbon resin may be at least partially hydrogenated, for instance at least 90 % hydrogenated. In embodiments, the dicyclopentadiene hydrocarbon resin may be at least 95 %, 99 %, or fully hydrogenated. The dicyclopentadiene hydrocarbon resin may be provided in the form a masterbatch e.g. blended with polyethylene.

One or more of the layers of the film may comprise a pigment. Suitable pigments for use in polyethylene films e.g. for silage making, are known to persons of skill in the art and include, for instance, titanium dioxide and carbon black. Different layers of the film may contain different pigments and/or amounts of pigment. In general, silage films may include a pigment providing a light colour, such as white, light blue or light green, to the side of the film intended to face outwards, such that sunlight is reflected. Hence, at least an outer layer, e.g. layer 101 may contain a pigment providing a light color. Further, silage films, in particular film intented for use in bunker or pit silos, may have a dark colored second side intended to face the crop, in order to prevent light transmission into the silo. Hence, a layer, such as the layer 103, may contain a dark pigment, such as a black pigment.

The film may optionally contain a UV stabilizer, present in one or more of the layers, e.g. in outer layer 101, and optionally in each of the layers 101, 102, 103. By the term "UV stabilization" is meant protection of a material from the long-term degradation effects from light, most frequently ultraviolet radiation (UV). A UV stabilizer may be advantageous for preventing chain reactions caused by e.g. radicals within the polyolefin layer(s) of the prestretched polyethylene film e.g. during storage outdoors of the prestretched polyethylene film.

The film may optionally contain other conventional additives, such as fillers, slip agents, tackifiers, processing aids, nucleating agents, and the like.

The film 100 may be a silage film, e.g. intended as a cover for a bunker silo or a pit silo. For this purpose, certain mechanical properties are desirable or required. The film may have one or more of the following properties: an Elmendorf tear strength (machine direction, MD) of at least 400 cN, preferably at least 500 cN; an Elmendorf tear strength (transverse direction, TD) of at least 1500 cN, preferably at least 2000 cN; a strength at break (MD and/or TD) of at least 17 MPa, preferably at least 23 MPa; an elongation at break (MD) of at least 250 %, preferably at least 500 %; an elongation at break (TD) of at least 250 %, preferably at least 500 %; and a dart resistance of at least 200 g, preferably at least 400 g.

Bunker silo films and pit silo films typically have a thickness in the range of from 80 to 180 µm, such as from 90 to 130 µm, or from 100 to 120 µm, or about 110 µm. In order to cover such a silo with a single film, the film may have a width in the range of from 5 to 20 meters, such as from 10 to 18 meters or from 12 to 18 meters. For instance, for a 12 m wide film, the film weight per meter of film may be in the range of from 1.0 to 1.5 kg/m, or from 1.2 to 1.4 kg/m. The film may be supplied at a film length up to 400 m, e.g. from 50 to 400 m.

Furthermore, the bunker silo film may be a multilayer film, such as a multilayer film comprising two outer layers sandwiching at least one core layer. As an example, the multilayer film may consist of a single core layer sandwiched between two outer layers (skin layers). The at least one core layer of a silage film may have a thickness that is between 40-60% of the whole film thickness. For example, the at least one core layer may have a thickness that is between 40-80 µm, such as between 50-70 µm, such as about 60 µm, whereas the outer layers each may have a thickness that is between 15-35 µm, such as between 15-25 µm or between 25-35 µm. The outer layers may have the same thickness or have different thicknesses.

Moreover, since a silage film of the present disclosure has a lower oxygen permeability, i.e. better barrier properties, than conventional silage films, the silage film of the present disclosure may be thinner than conventional silage films for the same application, but still have the same barrier properties as a conventional film. It may be advantageous to have a thinner silage film since such a film may be of lower weight, and therefore easier to handle and use. Therefore, a bunker or pit silo film of the present disclosure may have a thickness that is less than 100 µm, such as between 60-100 µm, such as between 70-90 µm.

In other embodiments, the film may be a stretch wrap film intended for wrapping of silage bales, also referred to as a bale wrap film. Such films are typically thinner than the abovementioned silo films, having a thickness typically in the range of from 15 to 30 µm. bale wrap films are typically provided in the form of rolls, having a film width to match the operating width of the wrapper, often from 500 to 750 mm. The length of the film on a single roll may be at least 1000 m, or at least 1500 m and up to 2500 m, or up to 2200 m.

In embodiments, the film may be prestretched. The expression prestretched film means that the film is stretched in the longitudinal direction during the film production process before being wound to a roll. Stretching is typically performed in a prestretch unit of the production line and involves passing the film between two or more stretching rollers rotating at different speeds. The prestretching may preferably be performed directly after the extrusion or film blowing steps, while the film is still hot. The degree of prestretching is intended to mean the difference in speed, in percent, between the stretching rollers in the prestretch unit. The difference in speed corresponds to the elongation of the prestretched film between the stretching rollers in the prestretch unit.

According to some embodiments, a prestretched polyethylene film may have a longitudinal degree of prestretching above 70%. The longitudinal degree of prestretching of the prestretched polyethylene film may for example be between 70% and 150%, such as between 70% and 125%, between or 70% and 100%. According to some embodiments, a prestretched polyethylene film may have a longitudinal degree of prestretching between 70% and 85%, preferably between 71% and 79%, preferably between 73% and 77%, preferably about 75%. According to some embodiments, the prestretched polyethylene film has a remaining longitudinal elongation capability of at least 320%, preferably at least 340%, as determined according to ASTM D882.

The term elongation capability as used herein means the elongation percentage at break, as measured in accordance with the ASTM D882 standard, wherein a strip of film with a width of 20 mm, clamped between two clamps at a distance of 50 mm from each other is stretched at a rate of 500 mm/min until the film breaks. At least five strips of the film must be measured, and the elongation capability corresponds to the mean value of the measurements.

According to some embodiments, the stress required in order to stretch the prestretched polyethylene film by 70% in the longitudinal direction is less than 19 MPa, preferably less than 18 MPa, as determined according to ASTM D882. The stress required in order to stretch the prestretched film by 70% in the longitudinal direction can be read from the tensile strength graph obtained when measuring the elongation percentage at break in accordance with the ASTM D882 standard as described herein. At least five strips of the film must be measured, and the stress at 70% elongation corresponds to the mean value of the measurements.

According to an embodiment, at least one outer layer, or if present, a skin layer, of the film 100 may comprise a soft polymer. A soft polymer may provide a relatively soft surface to the outer surface of the film which may increase friction and reduce slip in a direction substantially parallel to the film surface. A soft polymer may particularly be advantageous in a stretch wrap film, which in use is wrapped with an overlap such that the film may adhere, or cling, to itself. By the term "cling" is meant the ability of a material to adhere to itself or an adjacent object. The adjacent object may be a layer of the same or a different film.

According to an embodiment, the film may comprise a tackifier. By the term "tackifier" is herein meant an agent that provides cling to a film. Such an agent may be added to a layer of the polyethylene film in order to increase the cling of the layer. For instance, a tackifier may be a soft polymer, or a migrating tackifier. A tackifier thus serves to increase the cling of the polyethylene film, in particular, one or both of the outer layers or skin layers.

According to an embodiment, the tackifier is a migrating tackifier. By the term "migrating tackifier" is herein meant a tackifier which is soluble in the film material, e.g. in polyethylene. If a migrating tackifier is added to a film (or film layer) in an amount exceeding the solubility level of the film (or film layer), the excess can migrate within the film material to the film surface (including also migrating from a first layer to and through another layer, when the first layer has been saturated with the migrating tackifier). A migrating tackifier may thus provide an adhesive surface which increases the friction in a direction substantially perpendicular to the film surface. A migrating tackifier may be advantageous when the film is e.g. wrapped, such that an exterior layer of a first portion of the polyethylene film adhere, or cling, to an exterior layer of a second portion of the same, or a different, polyethylene film.

According to an embodiment, the migrating tackifier is present at a content of from 1 to 15% by weight based on the total weight of the core layer. The content of migrating tackifier added to the at least one core layer typically exceeds the content of migrating tackifier required to saturate the at least one core layer with regard to the migrating tackifier. The content required to saturate the at least one core layer may depend on the content of polyethylene and other polyolefins, in which the migrating tackifier is soluble, in the at least one core layer.

According to an embodiment, the film is produced by a blown film process, known to persons of skill in the art. In embodiments where the film is a multilayer film, the film may be a coextruded blown film comprising at least two layers, and typically at least three layers.

A monolayer or multilayer polyethylene film according to embodiments of the invention may be produced by a manufacturing process involving the following steps:
a) providing at least a first extrudible composition comprising polyethylene having a density of 0.930 g/cm³ or less;
b) providing a dicyclopentadiene hydrocarbon resin;
c) mixing dicyclopentadiene hydrocarbon resin with said first extrudible composition;
d) optionally providing one or more additional extrudible compositions comprising polyethylene having a density of 0.930 g/cm³ or less;
e) optionally mixing dicyclopentadiene hydrocarbon resin with said additional extrudible composition;
f) extruding the first composition obtained in step c) to form at least one first layer;
g) optionally extruding the at least one additional extrudible composition of step d) or step e) to form at least one outer layer on adjacent the first layer.

The first layer may be a core layer, and the at least one additional extrudible composition, optionally mixed with dicyclopentadiene hydrocarbon resin, may form one or more additional layers, such as two outer layers sandwiching the core layer. For instance, a second extrudible composition, optionally mixed with dicyclopentadiene hydrocarbon resin masterbatch, may form an outer layer 101 as described above. A third extrudible composition, optionally mixed with dicyclopentadiene hydrocarbon resin may form a second outer layer 103 as described above.

The steps of extruding the first extrudible composition to form a first layer (e.g. core layer) and the one or more additional extrudible compositions to at least one outer layer, respectively, may be performed separately from each other e.g. by monoextrusion, or simultaneously e.g. by coextrusion. Typically, the multilayer film is prepared by co-extrusion, using one extruder per layer simultaneously. Monoextrusion and coextrusion are techniques generally known to the person skilled in the art.

Optionally, several extrudible compositions may be provided to form a plurality of core layers, at least one of which is mixed with the dicyclopentadiene hydrocarbon resin masterbatch. The step of extruding the first composition obtained in step a) to form at least one core layer may imply that the first composition is extruded to a single core layer or to multiple core layers. Typically, in the case of multiple core layers, the multiple core layers are extruded simultaneously by coextrusion and adhere to each other due to substantially identical chemical properties.

The dicyclopentadiene hydrocarbon resin may be provided in the form of a masterbatch mixed with polyethylene, such as LLDPE. The masterbatch may be mixed with the first extrudible composition and optionally with one or more additional extrudible composition(s) as described above. Preparation of a masterbatch containing a hydrocarbon resin derived by thermally polymerizing olefin feeds rich in dicyclopentadiene (DCPD) is known and is described e.g. in WO 98/55537 A1. Masterbatches containing dicyclopentadiene hydrocarbon resin are also commercially available.

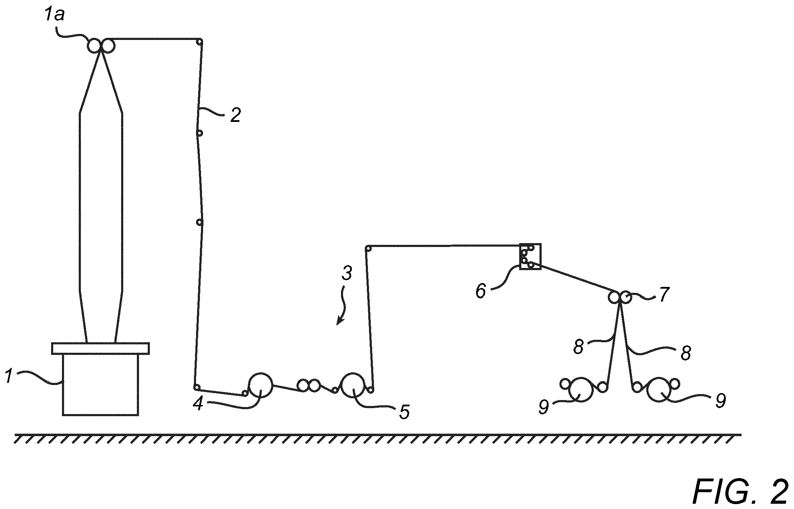

A blown film production line, such as prestretched balewrap, is schematically depicted in Fig. 2. A film composition as described above is extruded from a blow extruder 1 to form a blown film bubble that is advanced through primary nip rollers 1a. The nip roller nips together the blown film. From the primary nip rollers, the tubular film 2 is passed via guide rollers to a stretch unit 3, where stretching is performed between two rollers, first draw roller 4 and second draw roller 5, having different speeds. The stretch unit 3 may be omitted, in which case the film is not prestretched. Silage films intended for use in bunker silos or pit silos are typically not prestretched.

Next, the tubular film is passed to a dividing station 6 where the edges of the film 2 may be cut to provide two individual sheets of film. Next, the film 2 is passed to the secondary nip rollers 7 where the individual sheets of film 8 may be separated. Each film sheet 8 may optionally pass through a second dividing station (not shown) where the sheet may be divided longitudinally into two or more parallel sections of desired width. Finally, the film sheets, or film sheet sections, are wound onto the winders 9. In embodiments of the invention where the edges of the tubular film are not cut in the dividing station 6, the tubular film is typically wound onto one of the winders 9.

In embodiments, the film may be a prestretched stretch wrap film having a degree of prestretching above 70 %, for instance in the range from 75 to 100 %.

The film according to the invention is used as a protective film for the production of silage. In embodiments, the film is used in a method producing silage using a bunker silo or a pit silo, comprising the step of
i) arranging a volume of bulk crop material in a bunker or on the ground;
ii) optionally compacting the bulk crop material; and
iii) covering the bulk crop material with a film as described herein.

Preferably, the film is arranged over the crop to provide an airtight protective barrier.

In other embodiments, the film is used in a method of wrapping a bale of crop for the production of silage bales, comprising the steps of:
i) compacting bulk crop material to form a bale; and
ii) wrapping the bale with the film as described above.

Silage can be produced from grasses as well as numerous other crops, including grains (barley, oats, rice, wheat, rye, millet), corn, cornstalk, legumes, beans, soybeans, and vegetables.

### Examples

### Examples 1-5

Test films (monolayer) were produced polyethylene base material (mLLDPE or LDPE or medium density polyethylene, MDPE) of various suppliers as presented in Table 1, mixed, at different loading contents with a dicyclopentadiene hydrocarbon resin. The "A" sample of each series represented a reference, without dicyclopentadiene hydrocarbon resin. The films were extruded using a lab extruder LABTECH LF 250. Series 1 was made using medium density polyethylene.

**Table 1**

| **Sample series** | **Polyethylene base material** | **Film thickness (approx.)** |
|---|---|---|
| 1A-G | HF 513 (MDPE, density 0.934 g/cm³, Total) | 49 µm |
| 2A-G | FE 3000 (LDPE, Qapco) | 50 µm |
| 3A-G | Regranulated PE (Trioplast) | 110-120 µm |
| 4A-G | Exceed XP 6026ML (mLLDPE, Exxon) | 50 µm |
| 5A-G | Exceed XP 6026ML (mLLDPE, Exxon) | 107-115 µm |

The films were subjected to the following test: oxygen transmission rate (DIN 53380-3 using air instead of oxygen gas for testing), strength at break (ASTM D882 or ISO 527-3), elongation at break (ASTM D882 or ISO 527-3), Elmendorf tear strength (ASTM D1922 or ISO 6383-2). Additionally, the pressure before and after the extruder filter was recorded as well as engine intensity.

**Table 2a. Polyethylene base material: HF 513 (Total), density 0.934 g/cm³ (Comparative). Film characteristics and oxygen transmission data.**

| **Film No.** | **Total PE material (wt %)** | **DCPD (wt%, approx.)** | **Thickness by weight (µm)** | **OTR (cm3/m2/day)** | **Pressure before filter (bar)** | **Pressure After filter (bar)** | **Engine (%)** |
|---|---|---|---|---|---|---|---|
| **1A** | 100 | 0 | 49.5 | 423 | 378 | 346 | 78 |
| **1B** | 96.7 | 3.1 | 49.3 | 362 | 358 | 330 | 75 |
| **1C** | 93.7 | 6.3 | 48.2 | 311 | 338 | 311 | 72 |
| **1D** | 90.6 | 9.4 | 49.1 | 217 | 311 | 287 | 68 |
| **1E** | 87.5 | 12.5 | 49.7 | 193 | 294 | HS | 64 |
| **1F** | 84.4 | 15.6 | 50.5 | 169 | 275 | HS | 58 |
| **1G** | 81.2 | 18.8 | 49.1 | 152 | 245 | HS | 58 |

**Table 2b. Polyethylene base material: HF 513 (Total) (Comparative). Mechanical properties.**

| **Film No.** | **Strength at break MD (%)** | **Strength at break TD (%)** | **Elongation at break MD (%)** | **Elongation at break TD (%)** | **Elmendorf MD (cN)** | **Elmendorf TD (cN)** |
|---|---|---|---|---|---|---|
| **1A** | 44.3 | 46.7 | 644 | 774 | 224 | 1184 |
| **1B** | 46.6 | 43.3 | 673 | 797 | 224 | 1296 |
| **1C** | 42.4 | 43.1 | 663 | 790 | 208 | 1288 |
| **1D** | 41.1 | 40.5 | 691 | 793 | 192 | 1336 |
| **1E** | 42.3 | 36.6 | 707 | 799 | 144 | 1264 |
| **1F** | 36.1 | 32.8 | 684 | 782 | 112 | 992 |
| **1G** | 35.2 | 33.1 | 668 | 827 | 96 | 464 |

**Table 3a. Polyethylene base material: FE 3000 (Qapco). Film characteristics and oxygen transmission data.**

| **Film No.** | **Total PE-material (wt %)** | **DCPD (wt%, approx.)** | **Thickness by weight (µm)** | **OTR (cm3/m2/day)** | **Pressure before filter (bar)** | **Pressure After filter (bar)** | **Engine (%)** |
|---|---|---|---|---|---|---|---|
| **2A** | 100 | 0 | 49.8 | 709 | 208 | 187 | 58 |
| **2B** | 96.7 | 3.1 | 49.4 | 588 | 196 | 178 | 58 |
| **2C** | 93.7 | 6.3 | 50.4 | 511 | 183 | 166 | 55 |
| **2D** | 90.6 | 9.4 | 50.4 | 430 | 171 | 156 | 55 |
| **2E** | 87.5 | 12.5 | 50.5 | 372 | 159 | 144 | 52 |
| **2F** | 84.4 | 15.6 | 49.3 | 365 | 150 | 135 | 50 |
| **2G** | 81.2 | 18.8 | 49.6 | 284 | 131 | 120 | 50 |

**Table 3b. Polyethylene base material: FE 3000 (Qapco). Mechanical properties.**

| **Film No.** | **Strength at break MD (MPa)** | **Strength at break TD (MPa)** | **Elongation at break MD (%)** | **Elongation at break TD (%)** | **Elmendorf MD (cN)** | **Elmendorf TD (cN)** |
|---|---|---|---|---|---|---|
| **2A** | 28.9 | 27.3 | 417 | 497 | 88 | 168 |
| **2B** | 24.4 | 27.4 | 382 | 504 | 128 | 208 |
| **2C** | 26.6 | 27.6 | 451 | 521 | 136 | 248 |
| **2D** | 24.8 | 26.0 | 412 | 445 | 264 | 296 |
| **2E** | 24.4 | 25.1 | 460 | 572 | 336 | 336 |
| **2F** | 22.5 | 22.8 | 428 | 544 | 352 | 352 |
| **2G** | 23.8 | 22.2 | 476 | 581 | 40 | 448 |

**Table 4a. Polyethylene base material: Regranulated PE (Trioplast) with MFI: 0.3, density: 0.92. Film characteristics and oxygen transmission data.**

| **Film No.** | **Total PE-material (wt %)** | **DCPD (wt%, approx.)** | **Thickness by weight (µm)** | **OTR (cm3/m2/day)** | **Pressure before filter (bar)** | **Pressure After filter (bar)** | **Engine (%)** |
|---|---|---|---|---|---|---|---|
| **3A** | 100 | 0 | 119.9 | 226 | 296 | 268 | 75 |
| **3B** | 96.7 | 3.1 | 110.7 | 188 | 275 | 250 | 68 |
| **3C** | 93.7 | 6.3 | 111.2 | 141 | 249 | 227 | 67 |
| **3D** | 90.6 | 9.4 | 109.4 | 128 | 232 | 211 | 63 |
| **3E** | 87.5 | 12.5 | 111.5 | 102 | 205 | 188 | 58 |
| **3F** | 84.4 | 15.6 | 112.4 | 86 | 180 | 165 | 58 |
| **3G** | 81.2 | 18.8 | 110.7 | 81 | 171 | 157 | 55 |

**Table 4b. Polyethylene base material: Regranulated PE (Trioplast). Mechanical properties.**

| **Film No.** | **Strength at break MD (MPa)** | **Strength at break TD (MPa)** | **Elongation at break MD (%)** | **Elongation at break TD (%)** | **Elmendorf MD (cN)** | **Elmendorf TD (cN)** |
|---|---|---|---|---|---|---|
| **3A** | 21.6 | 25.5 | 567 | 637 | 512 | 880 |
| **3B** | 21.8 | 22.8 | 562 | 570 | 528 | 872 |
| **3C** | 22.8 | 23.2 | 610 | 611 | 576 | 1064 |
| **3D** | 22.3 | 23.7 | 607 | 623 | 576 | 1096 |
| **3E** | 21.4 | 21.7 | 619 | 644 | 512 | 768 |
| **3F** | 20.2 | 18.8 | 643 | 631 | 280 | 424 |
| **3G** | 19.9 | 18.9 | 635 | 624 | 264 | 368 |

**Table 5a. Polyethylene base material: Exceed XP 6026ML (Exxon) with film thickness approx. 50µm. Film characteristics and oxygen transmission data.**

| **Film No.** | **Total PE-material (wt %)** | **DCPD (wt%, approx.)** | **Thickness by weight (µm)** | **OTR (cm3/m2/day)** | **Pressure before filter (bar)** | **Pressure After filter (bar)** | **Engine (%)** |
|---|---|---|---|---|---|---|---|
| **4A** | 100 | 0 | 50.1 | 777 | 384 | 349 | 85 |
| **4B** | 96.7 | 3.1 | 50.2 | 651 | 362 | 328 | 78 |
| **4C** | 93.7 | 6.3 | 50.3 | 584 | 330 | 302 | 75 |
| **4D** | 90.6 | 9.4 | 50.1 | 503 | 310 | 283 | 72 |
| **4E** | 87.5 | 12.5 | 49.7 | 444 | 270 | 248 | 67 |
| **4F** | 84.4 | 15.6 | 50.2 | 394 | 245 | 223 | 63 |
| **4G** | 81.2 | 18.8 | 50.0 | 350 | 235 | 210 | 63 |

**Table 5b. Polyethylene base material: Exceed XP 6026ML (Exxon) with film thickness approx. 50µm. Mechanical properties.**

| **Film No.** | **Strength at break MD (MPa)** | **Strength at break TD (MPa)** | **Elongation at break MD (%)** | **Elongation at break TD (%)** | **Elmendorf MD (cN)** | **Elmendorf TD (cN)** |
|---|---|---|---|---|---|---|
| **4A** | 67.2 | 62.7 | 707 | 654 | 416 | 608 |
| **4B** | 61.9 | 61.1 | 630 | 641 | 464 | 672 |
| **4C** | 63.8 | 62.7 | 665 | 669 | 552 | 816 |
| **4D** | 61.9 | 65.7 | 666 | 702 | 624 | 920 |
| **4E** | 58.2 | 58.3 | 667 | 717 | 672 | 1048 |
| **4F** | 56.2 | 54.4 | 702 | 671 | 840 | 1096 |
| **4G** | 54.0 | 50.4 | 688 | 681 | 776 | 1160 |

**Table 6a. Polyethylene base material: Exceed XP 6026ML (Exxon) with film thickness 107-117 µm. Film characteristics and oxygen transmission data.**

| **Film No.** | **Total PE-material (wt %)** | **DCPD (wt%, approx.)** | **Thickness by weight (µm)** | **OTR (cm3/m2/day)** | **Pressure before filter (bar)** | **Pressure After filter (bar)** | **Engine (%)** |
|---|---|---|---|---|---|---|---|
| **5A** | 100 | 0 | 115.6 | 297 | 422 | 387 | 91 |
| **5B** | 96.7 | 3.1 | 114.6 | 261 | 385 | 355 | 85 |
| **5C** | 93.7 | 6.3 | 115.7 | 207 | 350 | 322 | 78 |
| **5D** | 90.6 | 9.4 | 116.9 | 177 | 315 | 290 | 72 |
| **5E** | 87.5 | 12.5 | 112.7 | 155 | 285 | 265 | 67 |
| **5F** | 84.4 | 15.6 | 107.9 | 134 | 260 | 241 | 67 |
| **5G** | 81.2 | 18.8 | 107.2 | 121 | 235 | 217 | 63 |

**Table 6b. Polyethylene base material: Exceed XP 6026ML (Exxon) with film thickness approx. 107-117 µm. Mechanical properties.**

| **Film No.** | **Elmendorf** | **Elmendorf** |
|---|---|---|
| | **MD** | **TD** |
| | **(cN)** | **(cN)** |
| **5A** | 1320 | 1456 |
| **5B** | 1256 | 1415 |
| **5C** | 1560 | 1856 |
| **5D** | 1824 | 1920 |
| **5E** | 1832 | 2216 |
| **5F** | 1832 | 2264 |
| **5G** | 1936 | 1928 |

The above examples demonstrate that the use of dicyclopentadiene hydrocarbon resin in at least one layer of a polyethylene film of low density yields a significant decrease in oxygen transmission rate. Additionally, the mechanical properties were generally maintained at a desirable level or even improved as tear resistance increased. Elongation at break and strength at break were not significantly affected. Finally, is was surprisingly found that the pressure in the screw decreased and the screw engine intensity decreased. However, it was noted that the tear strength (MD) of all the samples based on medium density polyethylene was undesirably low for use in silage applications (Table 2b).

### Example 6

Exemplary films and reference films were produced using a full scale blown film co-extrusion process. The exemplary films had three layers, formed from first, second and third extrudible compositions having the content as shown in Table 7.

**Table 7.**

| **Extrud. composition/ Layer** | **Material** | **Content by weight of the respective composition/layer** | **Layer thickness** |
|---|---|---|---|
| A | mLLDPE, density 0.921 g/cm³ | 75% | 20 µm |
| | other LLDPE | 5-6 % | |
| | Dicyclopentadiene hydrocarbon resin | 9.5 % | |
| | coloring agent | 7 % | |
| | Processing aid | 1 % | |
| | Slip agent | 1% | |
| | UV stabilizer | 1 % | |
| B | Regranulated polyethylene, density <0.930 g/cm³ | 77 % | 60 µm |
| | Other LLDPE | 5.5 % | |
| | Dicyclopentadiene hydrocarbon resin | 9.5 % | |
| | Coloring agent | 7 % | |
| | UV stabilizer | 1 % | |
| C | mLLDPE density 0.921 g/cm³ | 75 % | 30 µm |
| | Other LLDPE | 5.5 % | |
| | Dicyclopentadiene hydrocarbon resin | 9.5 % | |
| | Coloring agent | 7 % | |
| | Processing aid | 1 % | |
| | Slip agent | 1 % | |
| | UV stabilzer | 1 % | |

The extrudible compositions were each mixed separately using blending devices or mixing devices generally known to a person skilled in the art. By means of coextrusion, a film having an ABC layer structure was formed, wherein a core layer (B) was formed of the first extrudible composition and two exterior layers (A and C, respectively) sandwiching the core layer were formed of the second extrudible composition (A) and the third extrudible composition (C), respectively. During the extrusion process the bubble stability was excellent. 55 rolls were produced.

The total film composition was as shown in Table 8.

**Table 8.**

| **Material** | **Weiqht content (approx.)** |
|---|---|
| Polyethylene with density <0.930 g/cm³, | 81.5 % |
| (regranulated LLDPE/LDPE) | (42 %) |
| Dicyclopentadiene hydrocarbon resin | 9.5 % |
| Coloring agent | 7 % |
| Processing aid | 0.45 % |
| Slip agent | 0.45 % |
| UV stabilizer | 1 % |

The film had a width of 12 m, a length of 50 m, a thickness of 110 µm and an overall density of 0.970 g/cm³.

A reference film was produced in the same manner as described above for the exemplary film, except that instead of dicyclopentadiene hydrocarbon resin the film contained a blend of mLLDPE and regranulated polyethylene. The film had a width of 12 m, a length of 50 m, a thickness of 110 µm and an overall density of 0.958 g/cm³.

The OTR and mechanical properties of the films were analyzed. The results of the tests are summarized in Table 9.

**Table 9.**

| Sample (roll) no. | Comment | OTR cm³/m²/24h | Dart (g) after 48 h | Elmendorf tear strength (cN) | | Strength at break **(MPa)** | | **Elongation** at break **(%)** | |
|---|---|---|---|---|---|---|---|---|---|
| | | | | MD | TD | MD | TD | MD | TD |
| reference | Without DCPD hydrocarbon resin | 270 | 520 | 666 | 2321 | 28.0 | 29.1 | 563 | 641 |
| 1 | With DCPD hydrocarbon resin | 180 | 467 | 910 | 2677 | - | - | - | - |
| 21 | With DCPD hydrocarbon resin | 170 | - | 942 | 2652 | - | - | - | - |
| 31 | With DCPD hydrocarbon resin | 172 | 421 | 1080 | 2777 | 29.5 | 29.4 | 623 | 693 |
| 41 | With DCPD hydrocarbon resin | 168 | - | 916 | 2663 | - | - | - | - |
| 51 | With DCPD hydrocarbon resin | 164 | 346 | 912 | 2730 | - | - | - | - |

## Claims

1. Use of a polyethylene-based film as a protective film for the production of silage, said film comprising
polyethylene at a content of 60-90 % by weight of the film, wherein the polyethylene is selected from linear low density polyethylene (LLDPE) and low density polyethylene (LDPE) and combinations thereof, wherein the LLDPE and LDPE have a density of 0.930 g/cm³ or less, and
a dicyclopentadiene hydrocarbon resin at a content of 3-20 % by weight of the film.

2. The use according to claim 1, wherein the dicyclopentadiene hydrocarbon resin is at least 90 % hydrogenated.

3. The use according to any one of the preceding claims, wherein the film comprises at least one layer containing a mixture of linear low density polyethylene and dicyclopentadiene.

4. The use according to any one of the preceding claims, wherein the dicyclopentadiene hydrocarbon resin is present at a content of 5-13 % by weight of the film.

5. The use according to any one of the preceding claims, wherein the film has an oxygen gas transmission rate (OTR) of 250 cm³/m²/24h or less, as measured according DIN 53380-3 using air instead of oxygen gas.

6. The use according to any one of the preceding claims, wherein the film is a multilayer film, preferably comprising at least a first outer layer, a second outer layer, and a core layer arranged between said first outer layer and said second outer layer.

7. The use according to any one of the preceding claims, wherein the film has a thickness in the range of from 15 to 180 µm.

8. The use according to any one of the preceding claims, wherein the film further comprises one or more additives selected from pigments, dyes, fillers, UV stabilizers, tackifiers, slip agents, nucleating agents, and processing aids.

9. The use according to any one of the preceding claims, wherein the film comprises one or more pigments at a content of from 3 to 10 % by weight of the film, such as from 5 to 7 % by weight of the film.

10. The use according to any one of the preceding claims, wherein the film has a thickness in the range of from 80 to 180 µm, preferably from 90 to 125 µm and optionally a width in the range of 5-20 m, preferably 6-18 m.

11. The use according to claim 10, wherein the film is cut to a length of 400 m or less, preferably 100 m or less.

12. The use according to any one of the claims 1 to 9, wherein the film has a thickness in the range of from 15 to 30 µm and optionally a width in the range of from 500 to 1500 mm, preferably 500-750 mm or 1100 to 1500 mm.

13. The use according to claim 12, wherein the film is cut to a length of 1500-2500 m, preferably 1800-2200 m.

14. The use according to claim 12 or 13, wherein the film is prestretched, i.e. stretched in the longitudinal direction during the film production process before being wound to a roll.

15. Use of a film according to any previous claim, wherein the use is for covering a pit silo or a bunker silo.

16. Use of a film according to any previous claim, wherein the use is for wrapping of silage bales.

## Patentansprüche

1. Verwendung einer Polyethylen-basierten Folie als Schutzfolie zur Herstellung von Silage, wobei die Folie umfasst:
Polyethylen bei einem Gehalt von 60 bis 90 Gew.-% der Folie, wobei das Polyethylen ausgewählt ist aus linearem Polyethylen niedriger Dichte (LLDPE) und Polyethylen niedriger Dichte (LDPE) und Kombinationen davon, wobei das LLDPE und LDPE eine Dichte von 0,930 g/cm³ oder weniger aufweisen, und
ein Dicyclopentadien-Kohlenwasserstoffharz bei einem Gehalt von 3 bis 20 Gew.-% der Folie.

2. Verwendung nach Anspruch 1, wobei das Dicyclopentadien-Kohlenwasserstoffharz zu mindestens 90% hydriert ist.

3. Verwendung nach einem der einem der vorhergehenden Ansprüche, wobei die Folie mindestens eine Schicht umfasst, die eine Mischung aus linearem Polyethylen niedriger Dichte und Dicyclopentadien enthält.

4. Verwendung nach einem der einem der vorhergehenden Ansprüche, wobei das Dicyclopentadien-Kohlenwasserstoffharz in einem Gehalt von 5 bis 13 Gew.-% der Folie vorliegt.

5. Verwendung nach einem der einem der vorhergehenden Ansprüche, wobei die Folie eine Sauerstoffgasdurchlässigkeitsrate (OTR) von 250 cm³/m²/24h oder weniger aufweist, gemessen gemäß DIN 53380-3 unter Verwendung von Luft anstelle von Sauerstoffgas.

6. Verwendung nach einem der einem der vorhergehenden Ansprüche, wobei die Folie eine Mehrschichtfolie ist, vorzugsweise mindestens eine erste Außenschicht, eine zweite Außenschicht und eine Kernschicht umfassend, wobei die Kernschicht zwischen der ersten Außenschicht und der zweiten Außenschicht angeordnet ist.

7. Verwendung nach einem der einem der vorhergehenden Ansprüche, wobei die Folie eine Dicke im Bereich von 15 bis 180 µm aufweist.

8. Verwendung nach einem der vorhergehenden Ansprüche, wobei die Folie ferner ein oder mehrere Additive umfasst, die aus Pigmenten, Farbstoffen, Füllstoffen, UV-Stabilisatoren, Klebrigmachern, Gleitmitteln, Keimbildnern und Verarbeitungshilfsmitteln ausgewählt sind.

9. Verwendung nach einem der vorhergehenden Ansprüche, wobei die Folie ein oder mehrere Pigmente bei einem Gehalt von 3 bis 10 Gew.-% der Folie, beispielsweise 5 bis 7 Gew.-% der Folie, umfasst.

10. Verwendung nach einem der vorhergehenden Ansprüche, wobei die Folie eine Dicke im Bereich von 80 bis 180 µm, vorzugsweise von 90 bis 125 µm und gegebenenfalls eine Breite im Bereich von 5 bis 20 m, vorzugsweise 6 bis 18 m, aufweist.

11. Verwendung nach einem der vorhergehenden Ansprüche, wobei die Folie auf eine Länge von 400 m oder weniger, vorzugsweise 100 m oder weniger, geschnitten wird.

12. Verwendung nach einem der Ansprüche 1 bis 9, wobei die Folie eine Dicke im Bereich von 15 bis 30 µm und gegebenenfalls eine Breite im Bereich von 500 bis 1500 mm, vorzugsweise 500 bis 750 mm oder 1100 bis 1500 mm aufweist.

13. Verwendung nach Anspruch 12, wobei die Folie auf eine Länge von 1500 bis 2500 m, vorzugsweise 1800 bis 2200 m, geschnitten ist.

14. Verwendung nach Anspruch 12 oder 13, wobei die Folie vorgestreckt ist, d.h. während des Folienproduktionsprozesses, vor dem Aufwickeln auf eine Rolle, in Längsrichtung gestreckt.

15. Verwendung nach einem der vorhergehenden Ansprüche, wobei die Verwendung zum Abdecken eines Grubensilos oder eines Bunkersilos dient.

16. Verwendung nach einem der vorhergehenden Ansprüche, wobei die Verwendung zum Umwickeln von Silageballen dient.

## Revendications

1. Utilisation d'un film à base de polyéthylène comme film protecteur pour la production d'ensilage, ledit film comprenant
du polyéthylène à une teneur de 60 à 90% en poids du film, dans lequel le polyéthylène est choisi parmi le polyéthylène basse densité linéaire (LLDPE) et polyéthylène faible densité (LDPE) et leurs combinaisons, le LLDPE et le LDPE ayant une densité de 0,930 g/cm³ ou moins, et une résine d'hydrocarbure de dicyclopentadiène à une teneur de 3 à 20% en poids du film.

2. Utilisation selon la revendication 1, dans laquelle la résine d'hydrocarbure de dicyclopentadiène est hydrogénée à au moins 90%.

3. Utilisation selon l'une quelconque des revendications précédentes, dans laquelle le film comprend au moins une couche contenant un mélange de polyéthylène basse densité linéaire et de dicyclopentadiène.

4. Utilisation selon l'une quelconque des revendications précédentes, dans laquelle la résine d'hydrocarbure de dicyclopentadiène est présente à une teneur de 5-13% en poids du film.

5. Utilisation selon l'une quelconque des revendications précédentes, dans laquelle le film a un taux de transmission d'oxygène gazeux (OTR) de 250 cm³/m²/24h ou moins, tel que mesuré selon DIN 53380-3 utilisant de l'air au lieu de l'oxygène gazeux.

6. Utilisation selon l'une quelconque des revendications précédentes, dans laquelle le film est un film multicouche, comprenant de préférence au moins une première couche externe, une seconde couche externe et une couche centrale disposée entre ladite première couche externe et ladite seconde couche externe.

7. Utilisation selon l'une quelconque des revendications précédentes, dans laquelle le film a une épaisseur dans la gamme de 15 à 180 µm.

8. Utilisation selon l'une quelconque des revendications précédentes, dans laquelle le film comprend en outre un ou plusieurs additifs choisis parmi des pigments, des colorants, des charges, des stabilisants UV, des collants, des agents de glissement, des agents de nucléation et des auxiliaires de traitement.

9. Utilisation selon l'une quelconque des revendications précédentes, dans laquelle le film comprend un ou plusieurs pigments à une teneur de 3 à 10% en poids du film, telle que de 5 à 7% en poids du film.

10. Utilisation selon l'une quelconque des revendications précédentes, dans laquelle le film a une épaisseur dans la gamme de 80 à 180 µm, de préférence de 90 à 125 µm et optionnellement une largeur dans la gamme de 5 à 20 m, de préférence 6 à 18 m.

11. Utilisation selon la revendication 10, dans laquelle le film est coupé à une longueur de 400 m ou moins, de préférence de 100 m ou moins.

12. Utilisation selon l'une quelconque des revendications 1 à 9, dans laquelle le film a une épaisseur dans la gamme de 15 à 30 µm et optionnellement une largeur dans la gamme de 500 à 1500 mm, de préférence 500 à 750 mm ou 1100 à 1500 mm.

13. Utilisation selon la revendication 12, dans laquelle le film est coupé à une longueur de 1500 à 2500 m, de préférence 1800 à 2200 m.

14. Utilisation selon la revendication 12 ou 13, dans laquelle le film est préétiré, c'est-à-dire étiré dans le sens longitudinal pendant le processus de production du film avant d'être enroulé sur un rouleau.

15. Utilisation selon l'une quelconque des revendications précédentes, dans laquelle l'utilisation est destinée à recouvrir un silo à fosse ou un silo-couloir.

16. Utilisation selon l'une quelconque des revendications précédentes, dans laquelle l'utilisation est destinée à l'emballage de balles d'ensilage.
